# EUROPEAN PATENT APPLICATION

(11) **EP 1 857 272 A1**
(43) Date of publication of application: **21.11.2007**
(21) Application number: 06124946.2
(22) Date of filing: 28.11.2006
(51) Int. Cl.: B32B 27/34, A01G 9/14

(54) **Covering film for use in agriculture with heat insulation effect obtained by means of one or more polyamide layers**

(30) Priority: 19.05.2006 IT PD20060197
(71) Applicant: Agriplast S.r.l., 97019 Vittoria (IT)
(72) Inventor: CASCONE, Marco, 97019, VITTORIA (RAgusa) (IT)
(74) Representative: Vinci, Marcello

(57) **Abstract**

The invention is a new covering film for use in agriculture, consisting of one or more layers, having at least one layer comprising polyamide, be it homopolymer or copolymer. At least one layer comprises only polyamide. The polymers that make up the film layer/s can be homogeneous or heterogeneous and can be characterised by affinity or non-affinity of their polymeric structures from a molecular point of view, as well as by concentrations varying from 1 to 100%.

It is possible to include additives, like slipping additives, antistatic agents, anti-drip agents, UV stabilizers, mineral fillers, bonding agents for adjacent layers, nucleant agents, crosslinking agents, nanocomposite additives, hollow and solid microspheres in glass, silica, zeolite, ceramic or other materials.

## Description

### FIELD OF APPLICATION OF THE INVENTION

The present invention relates to a film in plastic material, consisting of one or more layers, mono-extruded or co-extruded, to be used in agriculture as a covering film for greenhouses, having a high heat insulation effect obtained through the use of polyamide (PA), be it a homopolymer or a copolymer, in one or more layers.

### STATE OF THE ART

Traditional coverings for greenhouses, both those tunnel-shaped and those with roof, can be divided into rigid or flexible coverings.

Rigid coverings are made of glass, polyester reinforced with glass fibres, corrugated rigid PVC, polymethyl methacrylate or polycarbonate and they have a thickness of several millimetres.

Flexible coverings are made of plasticised PVC, EVA copolymer (ethylene vinyl acetate), low density PE and linear PE, ethylene-tetra-fluoro ethylene, polyurethane, polypropylene and blends or mixtures thereof, and their thickness is usually in the order of tenths of a millimetre.

In any case, the characteristics required for the coverings of greenhouses are the following:
- mechanical resistance, including resistance to stress due to adverse weather agents and weather conditions, in such a way as to suitably protect the crop being grown under them;
- solar energy transmittance, in particular of P.A.R. (photosynthetic active radiations);
- greenhouse effect, i.e. capacity to transmit or filtrate radiation bands in the infrared field (7,000-13,000 nm);
- long life, particularly vis-à-vis the radiations that change their molecular structure.

Flexible films are less expensive than rigid sheets, require less complicated support structures and are easier to install.

Therefore, the choice of the covering material is very important, since it is necessary to take into account different needs that sometimes may be conflicting. For example, mechanical resistance increases as the thickness increases, but this reduces light transmission.

The IR effect, commonly known as greenhouse effect, is expressed as a percentage value and is graphically represented by the spectral absorbance of the film in the band included between 770 and 1430 cm⁻¹ in the infrared field. This series of wave lengths corresponds to the field of maximum emission of energy irradiated by the earth surface.

At present the covering films for use in agriculture mainly contain PE that, however, offers a relatively low greenhouse effect.

The current state of the art proposes films containing EVA compounds, since this offers a higher intrinsic IR effect compared to PE.

According to the current state of the art, the film compound contains PU or PVC, which offer a high intrinsic heat insulation effect.

PVC, on the other hand, poses considerable drawbacks, for example a very limited temperature range for use, included between -10 and 40°C, as well as the presence of plasticizers that migrate to the surface and tend to weaken the film.

Another alternative currently adopted is constituted by the use of fillers, usually consisting of silicates or silico aluminates, which considerably increase the greenhouse effect but at the same time weaken the film structure and significantly reduce its mechanical resistance with the same thickness and relative total transmittance.

The current reference standard (EN13206) for covering films to be used in agriculture classified as "clear thermic film" and "diffusing thermic film" requires a greenhouse effect that varies according to the film thickness, included between ≥ 55% and ≥ 75%.

In order to overcome all the drawbacks mentioned above, a new covering film for use in agriculture has been designed and produced, said film having a high insulation effect obtained by means of one or more polyamide layers.

### AIMS OF THE INVENTION

One of the aims of the present invention is to obtain a flexible film with high insulation effect, with no need to significantly alter the total transmittance of the film itself.

Another aim of the present invention is to obtain a film characterized by high flexibility, insulation effect and transmittance together with high mechanical resistance.

### DESCRIPTION OF THE INVENTION

The new covering film for use in agriculture involves the use of polyamide.

The new film can consist of one or more layers.

If the film consists of several layers, at least one of said layers comprises polyamide, be it a homopolymer or a copolymer.

At least one of said layers should preferably consist of polyamide only.

The melting temperatures of the polymers used in the same layer can be different, but the difference should preferably be included between 5 and 50°K, better if between 10 and 40°K.

Since the melting temperature of polyamide is in any case considerably higher than the melting temperature of polyethylene, EVA and other polymers, polyamide should preferably be used as the only polymeric component in one or more layers, without mixing it with other polymers.

The polymers that make up the layer/layers of the film can be homogeneous or heterogeneous and can be characterised by affinity or non-affinity of their polymeric structures from a molecular point of view, as well as by concentrations varying from 1 to 100%.

The various combinations of polymers, starting from base polymers and from the following heterogeneous pairs, can be:
- LDPE and PA;
- EVA and PA;
- LLDPE and PA;
- PP and PA;
- PA and PU;PVC and PA
and all the relative possible combinations of the above mentioned polymers.

The film can also be constituted of single layer or multiple layer PA only.

According to the invention, it is possible to include additives such as slip additives, antistatic agents, anti-drip agents, UV stabilizers, mineral fillers, bonding agents for adjacent layers, nucleant agents, crosslinking agents, nanocomposite additives, hollow and solid microspheres in glass, silica, zeolite, ceramic or other materials.

Modifications and additions are possible in the manufacture of the film that is the subject of the invention, provided that these remain within the scope of the present invention.

Each layer of the film can be obtained from mono or co-extrusion plants, of the blown or cast film type, without particular modifications, fitted in such a way as to be capable of operating with suitable flexibility according to the process conditions, turning speed of the screw/screws and temperature profiles, so as to adapt to the characteristics of the formula of the selected polymers.

The new film carried out according to the invention is characterized in that it has a very high specific IR effect compared to the thickness of the film itself.

The new film has a very high insulation effect, great mechanical resistance, very high total transmittance, which are not present in the products currently available that do not offer all said characteristics at the same time.

The characteristics of the new covering film allow it to be classified as "clear thermic film" o "diffusing thermic film" according to the EN13206 standard.

The new film has greenhouse effect characteristics, calculated between 7,000 and 13,000 nm in the infrared field, said values being considerably higher than those prescribed by the EN13206 reference standard for their class (clear thermic film or diffusing thermic film) and thickness.

### DESCRIPTION OF THE SYSTEM

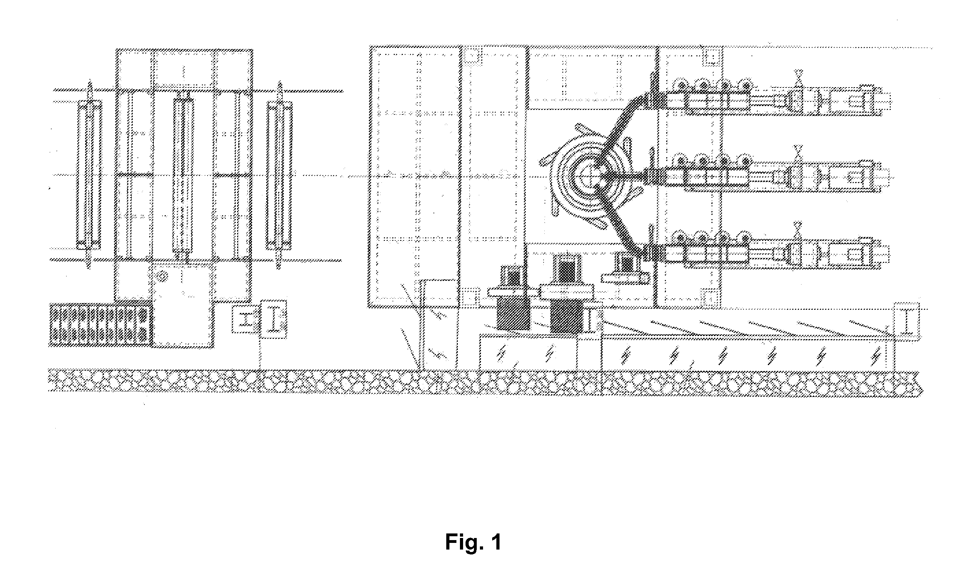

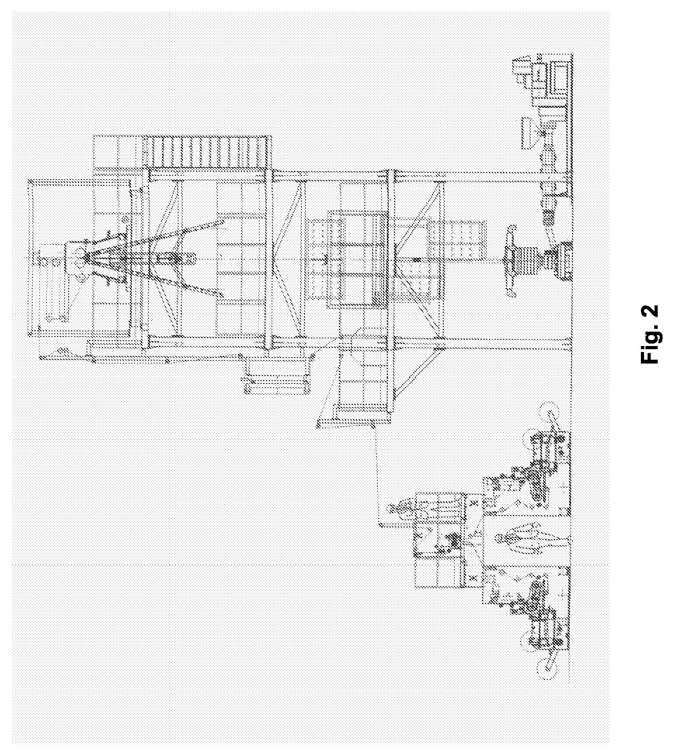

The new film that is the subject of the present patent is obtained by means of a special production plant capable of producing it, shown in Figures 1 and 2. The system producing the film subject of the invention described above preferably consists of a conventional extrusion machine.

The system for proportioning the various components to be mixed can be of the gravimetric or volumetric type, in any case suited to proportion the necessary components in the quantities required for the individual compounds in the single screws, including the relevant additives and colouring masters.

The granules of the base polymers and of the *compounds* making up the additives can be partially pre-mixed in a hopper suited to feed the extruder's feeding section.

If the production process includes co-extrusion, the feeding of granules and *compounds* will be proportional for each line.

Using various types of polymers for monoextrusion, the extrusion temperature must be almost equal to the melting point of the polymer with lowest melting point.

Temperature is gradually changed by means of automated controls, sector by sector, through thermocouple sensors connected to heat regulators through a control unit, for example a PLC, and respectively with electric resistors that heat the different sectors of the extruder.

Suitable centrifugal fans are properly arranged to cool the extruder.

The selection of the temperature of each sector of the extruder is defined according to the friction ratio generated between the cylinder and the inner screw and the rheological curves of the used polymers.

In this way the melted polymeric material reaches the correct fluidity and can flow through the head of the extruder and come out in a tubular shape.

The diameter and thickness of said tubular element are regulated by injecting air inside the tube and also depend on the speed of the extruder.

The tubular element is cooled at the base by tangential air and proceeds through the cooling tower, goes on and reaches the drive rollers positioned at the top of the system, said rollers completing the flattening of the tubular element that is conveyed downward towards the winder.

The coupling of various layers, if the film is produced through coextrusion, can be facilitated by the use of known bonding agents that favour adhesion between the various layers of the film.

Therefore, with reference to the above description and the attached drawings, the following claims are expressed.

## Claims

1. Covering film for use in agriculture, consisting of one or more homogeneous polymers or two or more heterogeneous polymers having different molecular structures that are not reactive to each other from the molecular point of view, but that can be bound due to their rheological characteristics, **characterised in that** it comprises polyamide.

2. Covering film according to claim 1, **characterised in that** it consists of several layers, and wherein at least one of said layers comprises polyamide.

3. Covering film according to claim 1, **characterised in that** it consists of several layers, and wherein at least one of said layers is a monopolymer constituted by polyamide.

4. Covering film according to claims 2 or 3, **characterised in that** it comprises polyamide as a homopolymer or a copolymer.

5. Covering film according to claims 2 or 3, **characterised in that** one or more layers comprise two or more mixed polymers, heated and extruded together, one of which is polyamide.

6. Covering film, in one or more layers, according to one or more of the preceding claims, **characterised in that** it is made with variable thickness ranging from 1 to 1000 µm per each layer.

7. Film according to one or more of the preceding claims, **characterised in that** it has a mechanical resistance higher than that of an analogous film not containing polyamide in the compound.

8. Covering film according to one or more of the preceding claims, **characterised in that** it is obtained through mono or coextrusion, of the blown or cast film type.

9. Covering film according to one or more of the preceding claims, **characterised in that** it may or may not contain in at least one of its layers, both in the layer/s containing polyamide and in any other layer/s of polymer/polymers not containing polyamide, slipping additives and/or antistatic agents and/or anti-drip agents and/or UV stabilizers and/or mineral fillers and/or bonding agents for adjacent layers and/or nucleant agents and/or crosslinking agents and/or maleic anhydride and/or nanocomposite additives and/or hollow and solid microspheres in glass, silica, zeolite and/or ceramic and/or other materials.
